# EUROPEAN PATENT APPLICATION

(11) **EP 4 783 041 A1**
(43) Date of publication of application: **29.07.2026**
(21) Application number: 26152460.7
(22) Date of filing: 16.01.2026
(51) Int. Cl.: G06F 21/31, G06N 20/00

(54) **INFORMATION PROCESSING APPARATUS, INFORMATION PROCESSING METHOD, AND PROGRAM**

(30) Priority: 27.01.2025 JP 2025011660
(71) Applicant: Canon Kabushiki Kaisha, Tokyo, 146-8501 (JP)
(72) Inventor: SOEDA, Yujiro, Tokyo, 146-8501 (JP)
(74) Representative: Canon Europe Limited

(57) **Abstract**

There is provided with an information processing apparatus capable of executing processing performed using a machine learning model. An identifying means identifies a user. A first obtaining means obtains an attribute of the identified user. A second obtaining means obtains an attribute of the machine learning model. A model control means performs control of operation of the machine learning model based on the attribute of the user and the attribute of the machine learning model.

## Description

### TECHNICAL FIELD

### Field of the Technology

The present disclosure relates to an information processing apparatus, an information processing method, and a program.

### BACKGROUND

Image recognition technology, automatic translation technology, and the like that use machine learning have undergone remarkable development in recent years, and are being applied in various products and services. Recently, Al that generates content such as documents or images on the basis of user inputs, called "generative AI", has also emerged, and is attracting attention.

As AI continues to spread, a large number of Al models (machine learning models) will come to be installed in information terminals on the Internet, including smartphones, PCs, and the like. It is therefore conceivable that a user will be able to select and use such AI models according to their preferences and purpose of use. At such a time, knowing what kind of user each Al model is appropriate for makes it easier for the user to select the optimal AI model that suits their preferences and purpose of use. AI models inappropriate for a particular user can be prevented from being mistakenly used by that user by restricting the use of those models. The convenience can also be improved by changing the operations and functions of a selected Al model in accordance with the user.

Japanese Patent Laid-Open No. 2021-81793 discloses a technique for selecting an AI model appropriate for a recognition target on the basis of the degree to which attributes of training data of each of a plurality of AI models match attributes of the recognition target.

### SUMMARY

In Japanese Patent Laid-Open No. 2021-81793, an Al model that matches the attributes of the recognition target is selected, but the use of AI models is not restricted, and the operations or functions of the Al model are not changed. Furthermore, with the technique of Japanese Patent Laid-Open No. 2021-81793, the Al model is selected on the basis of the attributes of the recognition target rather than the attributes of the user, and it is therefore not necessarily possible to select an AI model appropriate for the user's preferences and purpose of use.

According to one embodiment of the present disclosure, an information processing apparatus that prompts a user to use an Al model appropriate for their preferences or purpose of use is provided.

The present disclosure in its first aspect provides an information processing apparatus specified in claim1. Optional features are specified in claims 2 to 12.

The present disclosure in its second aspect provides an information processing method specified in claim13.

The present disclosure in its third aspect provides a program specified in claim14.

Features of the present disclosure will become apparent from the following description of embodiments with reference to the attached drawings. The following description of embodiments is described by way of example.

### BRIEF DESCRIPTION OF THE DRAWINGS

The accompanying drawings illustrate embodiments of the present disclosure, and together with the description, serve to explain the principles of the embodiments.
Fig. 1 is a block diagram illustrating an example of the functional configuration of an information processing apparatus according to a first embodiment.
Fig. 2 is a diagram illustrating user attributes and model attributes.
Fig. 3 is a diagram illustrating an example of a display UI provided by the information processing apparatus.
Fig. 4A is a flowchart illustrating an example of processing for registering user attributes.
Fig. 4B is a flowchart illustrating an example of processing for registering a model.
Fig. 4C is a flowchart illustrating an example of processing for registering control conditions.
Fig. 5 is a flowchart illustrating an example of model operation control processing according to the first embodiment.
Fig. 6 is a diagram illustrating model attributes according to a first variation.
Fig. 7 is a diagram illustrating user attributes according to a second variation.
Fig. 8 is a diagram illustrating model attributes and control conditions according to a third variation.
Fig. 9 is a diagram illustrating user attributes and model attributes according to a second embodiment.
Fig. 10 is a flowchart illustrating an example of model operation control processing according to the second embodiment.
Fig. 11 is a diagram illustrating model attributes according to a third embodiment.
Fig. 12 is a diagram illustrating model attributes according to a fourth embodiment.
Fig. 13 is a block diagram illustrating an example of the functional configuration of an information processing apparatus according to the fourth embodiment.
Fig. 14 is a diagram illustrating an example of a display UI provided by the information processing apparatus according to the fourth embodiment.
Fig. 15A is a flowchart illustrating an example of processing for registering a purpose of use.
Fig. 15B is a flowchart illustrating an example of model operation control processing according to the fourth embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

An information processing apparatus 10 according to the present embodiment controls the operation of a machine learning model in accordance with individual attributes of a user and attributes of the machine learning model. For example, if the user is a news reporter belonging to a news organization, it is conceivable to restrict processing using generative Al in order to prevent documents or images containing false information or infringing on copyright from being generated. Here, the term "news reporter" is used as a synonym for "member of press".

### Functional Configuration

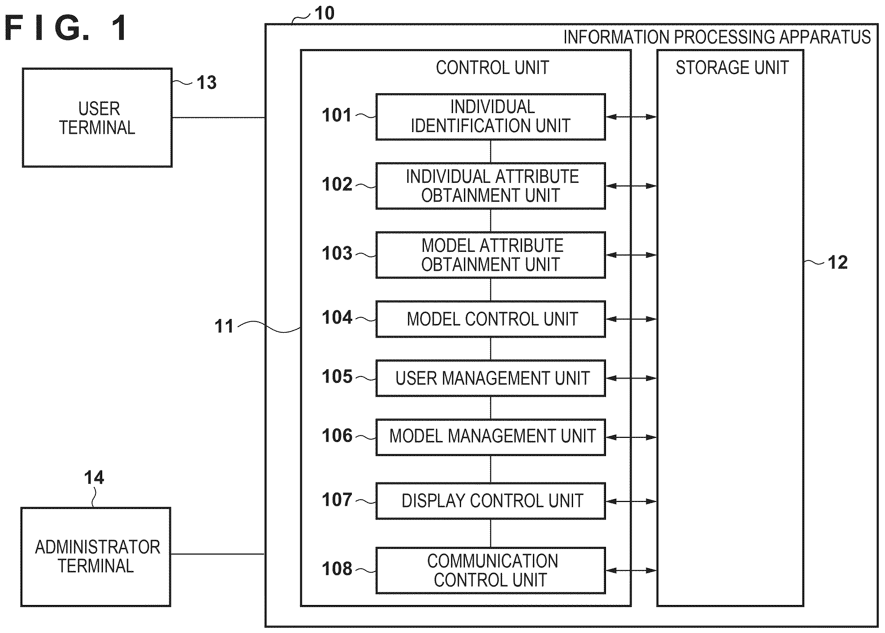

Fig. 1 is a block diagram illustrating an example of the functional configuration of the information processing apparatus 10 according to the present embodiment. The information processing apparatus 10 manages a number of machine learning models, and is capable of executing processing using the machine learning models. The information processing apparatus 10 can also use a large language model as the machine learning model to output text, images, or the like in response to inputs. The following descriptions assume that the term "model" refers to a machine learning model handled by the information processing apparatus 10 according to the present embodiment.

The information processing apparatus 10 can communicably connect a user terminal 13 and an administrator terminal 14 over a communication network such as a local area network (LAN) or the Internet. The form of the connection is not particularly limited. For example, each may be connected to the information processing apparatus 10 individually by wires, or by wireless communication. Fig. 1 illustrates one each of the user terminal 13 and the administrator terminal 14, but the numbers of the terminals are not particularly limited thereto. An information terminal such as a personal computer (PC), a smartphone, or a tablet terminal device, or a camera or the like, may be used as the user terminal 13 and the administrator terminal 14. Furthermore, although the present embodiment assumes a client-server model configuration, in which the information processing apparatus 10, the user terminal 13, and the administrator terminal 14 are separate apparatuses, with the user terminal 13 and the administrator terminal 14 connecting to the information processing apparatus 10 over the network, the configuration is not particularly limited thereto as long as equivalent processing can be executed. For example, the information processing apparatus 10, the user terminal 13, and the administrator terminal 14 may be implemented as a single apparatus, and edge processing may be executed.

The following descriptions assume that the user terminal 13 is a terminal used by a user who uses the model, and the administrator terminal 14 is a terminal used by a user who manages the information processing apparatus 10 (and the model in particular) (i.e., an administrator).

The information processing apparatus 10 includes a control unit 11 and a storage unit 12. Each unit will be described in detail hereinafter.

The control unit 11 includes an individual identification unit 101 (identifying means), an individual attribute obtainment unit 102 (first obtaining means), a model attribute obtainment unit 103 (second obtaining means), a model control unit 104 (model control means), a user management unit 105, a model management unit 106, a display control unit 107, and a communication control unit 108.

The individual identification unit 101 performs processing for identifying the user using the user terminal 13 and associating the identified user with a user ID already registered in the storage unit 12. For example, the individual identification unit 101 may identify the user through password-based authentication. The method for identifying the user by the individual identification unit 101 is not particularly limited, and biometric authentication such as fingerprint authentication, iris authentication, voiceprint authentication, or the like may be used as well.

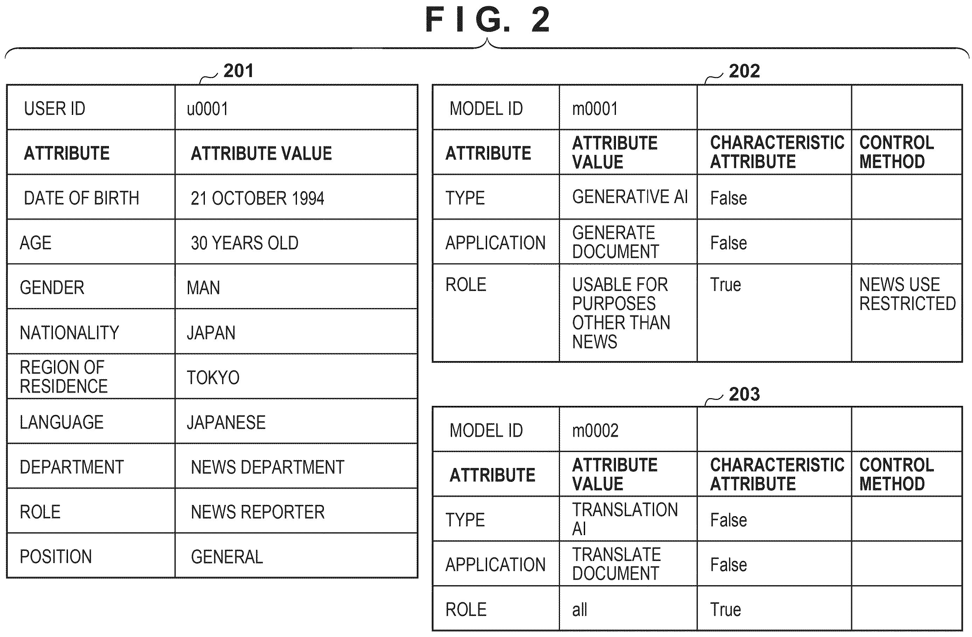

The individual attribute obtainment unit 102 obtains attributes of the user (user attributes). For example, as attributes of the user identified by the individual identification unit 101, the individual attribute obtainment unit 102 can obtain user attributes stored in the storage unit 12 in association with the user. The model attribute obtainment unit 103 obtains attributes of the model (model attributes). For example, the model attribute obtainment unit 103 can obtain model attributes for each of the models stored in the storage unit 12. Fig. 2 is a diagram illustrating an example of the user attributes and the model attributes according to the present embodiment.

Fig. 2 illustrates user attributes 201 corresponding to a user ID of "u0001", model attributes 202 corresponding to a model ID of "m0001", and model attributes 203 corresponding to a model ID of "m0002". Here, a plurality of items of attributes are included as the user attributes, and an attribute value is associated with each of those items (attribute items). As the attribute items, the user attributes 201 include date of birth, age, gender, nationality, region of residence, language, department, role, and position. In the following, the term "role" is used as a synonym for "occupation", "job" or "position". In the present embodiment, such attribute items and attribute values corresponding to those attribute items are stored in the storage unit 12 in association with the user ID as the user attributes. Note that the attribute items included in the user attributes illustrated in Fig. 2 are merely examples, and different items may be included as well.

Meanwhile, a plurality of attribute items are included as the model attributes, and an attribute value, a characteristic attribute, and a control method are associated with each of the attribute items. The model attributes 202 and 203 include type, application, and role as the attribute items. Here, the "characteristic attribute" is assumed to be information indicating whether the associated attribute item is being used in a condition for whether to perform control regarding the operation of the model (a control condition). Here, the characteristic attribute is indicated as "True" or "False", and if True, the associated attribute item is used in the control conditions for the model. In the following, an attribute item for which the characteristic attribute set in this manner is True may be expressed as the attribute item "having a characteristic attribute".

"Control method" indicates the details of the control conditions for the model. In the model m0001, only the attribute item "role" has the characteristic attribute set to True, and the control method is therefore only set for the attribute item of "role". Here, the model m0001 is set such that the user thereof is restricted when the user is a news officer, and the control method is indicated as "news use restricted". In the present embodiment, such attribute items, the attribute values corresponding to those attribute items, attribute items that are characteristic attributes, and control methods are stored in the storage unit 12 in association with the model ID as the model attributes. Note that the attribute items included in the model attributes illustrated in Fig. 2 are merely examples, and different items may be included as well.

The model control unit 104 controls the operation of the model on the basis of the user attributes and the model attributes. As described above, the model control unit 104 according to the present embodiment controls the model m0001 such that the use thereof is restricted when the user is a news officer. Here, "when the user is a news officer" may be set through any method, such as when the attribute item of the user is a predetermined item associated with "news officer" (here, includes "news reporter"), or when the text "news" is included in the attribute items of the user. In the example illustrated in Fig. 2, where the user indicated by the user ID of u0001 uses the model m0001, the attribute item "role" of the user u0001 is "news reporter", and the control condition of the model m0001 is "news use restricted". As such, the use of the model m0001 is restricted.

Here, "restricting the use of the model" may mean restricting the functions of the model or disabling the model, and the degree of the restriction can be set as desired.

The user management unit 105 can register users and user attributes in the information processing apparatus 10. Here, the user management unit 105 manages registered users by assigning unique numbers as the user IDs. The user management unit 105 manages the user attributes in association with the user ID (as the user attributes indicated by 201 in Fig. 2). If the user is identified through password-based authentication, the user management unit 105 manages a login account and password as user information in association with the user ID. If the user is identified through biometric authentication, the user management unit 105 manages biometric information as user information in association with the user ID.

For example, the user management unit 105 can obtain and register information about the user and the user attributes on the basis of input information input to the user terminal 13 or the administrator terminal 14. It is assumed here that the information on the user attributes (and, depending on the case, the information on the user) is input to the user terminal 13 by the user or to the administrator terminal 14 by the administrator, and the user management unit 105 registers the user and the user attributes by obtaining those inputs.

The model management unit 106 registers the models and the model attributes in the information processing apparatus 10. Here, the model management unit 106 manages registered models by assigning unique numbers as the model IDs. The model management unit 106 manages the model attributes in association with the model IDs (as the model attributes indicated by 202 in Fig. 2). The model management unit 106 can also manage a generative AI model, an interpreting model, an object detection model, a voice recognition model, and the like in association with the model IDs as the types of the models.

For example, the model management unit 106 can obtain and register information about the models and the model attributes on the basis of input information input to the user terminal 13 or the administrator terminal 14. It is assumed here that the information on the models and the information on the model attributes are input to the user terminal 13 by the user or to the administrator terminal 14 by the administrator, and the model management unit 106 registers the models and the model attributes by obtaining those inputs.

The display control unit 107 performs control for displaying results in the information processing apparatus 10 (e.g., in response to requests from the user terminal 13 and the administrator terminal 14).

The communication control unit 108 controls the transmission and reception of information between the information processing apparatus 10 and the user terminal 13 or the administrator terminal 14.

The storage unit 12 is a read-only memory (ROM), a random access memory (RAM), or the like, and stores various types of information, for example. For example, the storage unit 12 stores various programs for causing the information processing apparatus 10 to function. The storage unit 12 further stores the user information such as login accounts or biometric information, the user attributes, the models and model attributes, or the like.

### UI and Operating Modes

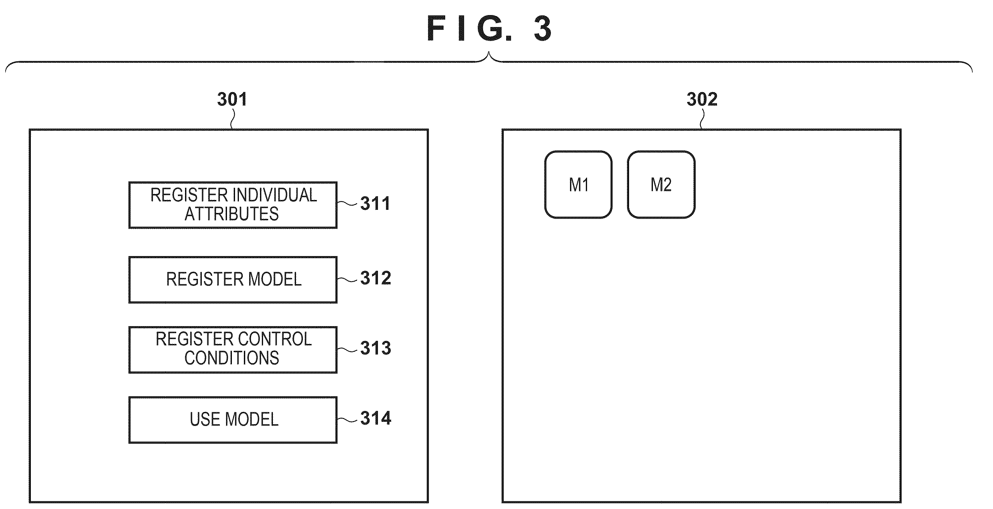

Examples of user interfaces (Uls) in which display control is performed by the display control unit 107 according to the present embodiment are indicated by a UI 301 and a UI 302 in Fig. 3.

The UI 301 is a screen for the user to select an operating mode of the information processing apparatus 10, and displays operating modes that can be selected. Here, a user attribute registration mode, a model registration mode, a control condition registration mode, and a model use mode are used as operating modes, and buttons 311 to 314 are displayed in the UI 301 as buttons corresponding to those respective modes. The present embodiment assumes that the model use mode can be selected when one or more user attributes and one or more model attributes are registered. The present embodiment also assumes that the control conditions are registered in response to the button 313 is pressed, but default settings (described later) may be used as the control conditions if the button 313 is not pressed. As a default control condition, reference is made to the characteristic attributes in the model attributes. When the button 314 is pressed, the UI changes from the UI 301 to the UI 302.

The UI 302 is a screen that displays a list of usable models. In the UI 302, icons starting with M, representing each of the usable models, are displayed. In the present embodiment, two models are present as the models, namely the models m0001 and m0002, and icons M1 and M2 correspond to those models. When the icon of one of the models is selected, the selected model starts operating.

Processing executed in each of the modes will be described hereinafter.

### Processing Flows

### Flow of User Attribute Registration

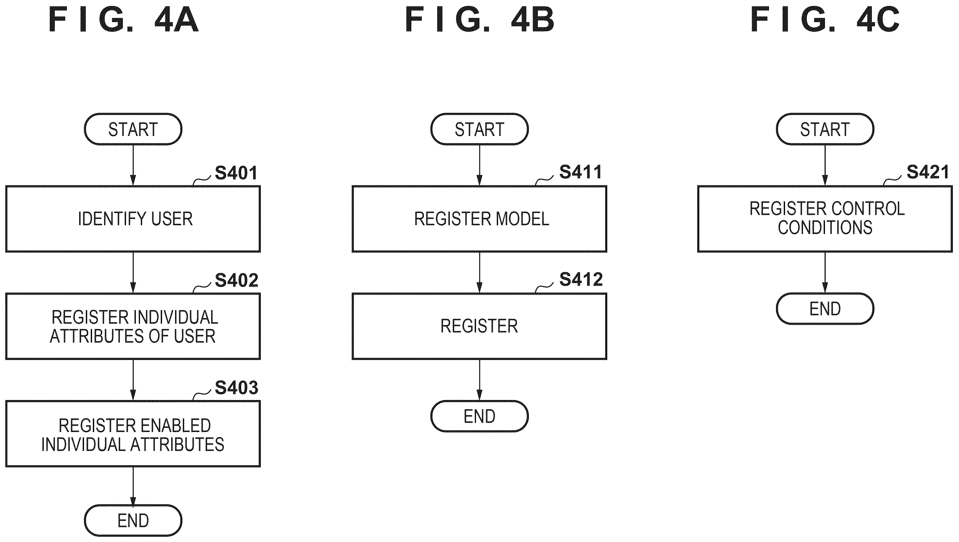

Fig. 4A is a flowchart illustrating an example of processing by which the information processing apparatus 10 registers the user attributes. The user attribute registration processing illustrated in Fig. 4A is performed on the basis of inputs to the user terminal 13 or the administrator terminal 14, for example. It is assumed here that the user attributes are registered by the user u0001 making an input to the user terminal 13. It is also assumed that the user has been registered in the information processing apparatus 10 in advance.

In step S401, the individual identification unit 101 performs processing for identifying the user using the user terminal 13 and associating the identified user with a user ID already registered in the storage unit 12. The method for identifying the user by the individual identification unit 101 is not particularly limited, and password-based authentication, or biometric authentication such as fingerprint authentication, iris authentication, voiceprint authentication, or the like, may be used as well.

In step S402, the user management unit 105 obtains the user attributes input to the user terminal 13. The user management unit 105 can store the obtained user attributes in the storage unit 12 in association with a user ID on the basis of an instruction from the user terminal 13. Here, the user attributes indicated by the user attributes 201 in Fig. 2 are managed in association with the user ID. The attribute value of "age" may be automatically calculated from the date of birth, for example. In this case, the value of "age" is updated each time the user has a birthday. The attribute values other than "age" are assumed to be updated each time the processing illustrated in Fig. 4A is executed.

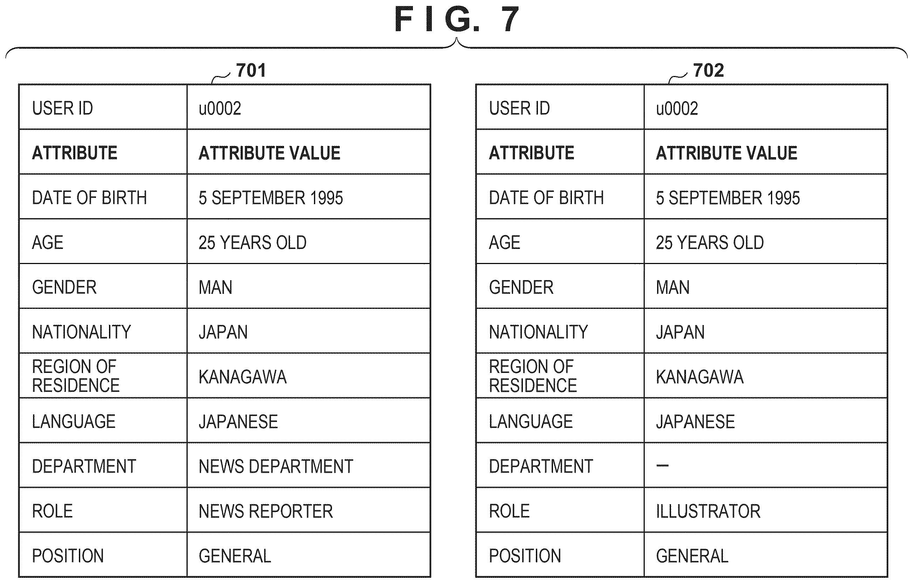

Furthermore, a plurality of user attributes can be registered for each user ID, as in the second variation, which will be described later with reference to Fig. 7. When a plurality of user attributes have been registered for a single user ID, it is conceivable that the user attributes to be enabled from among the registered attributes will be switched and then used. In such a case, the information processing apparatus 10 can determine which user attributes to enable on the basis of user inputs. From this perspective, in step S403, the user management unit 105 registers the user attributes to actually be used (enabled user attributes) from among the registered user attributes, after which the processing illustrated in Fig. 4A ends. Here, the user attributes selected by the user in the user terminal 13 are registered as the enabled user attributes. If only one user attribute is registered for a single user ID, the single user attribute is set as the enabled user attribute.

### Flow of Model Registration

Fig. 4B is a flowchart illustrating an example of processing by which the information processing apparatus 10 registers the model and the model attributes. The processing illustrated in Fig. 4B is performed on the basis of inputs to the user terminal 13 or the administrator terminal 14, for example. It is assumed here that the model and the model attributes are registered for the model m0001 by the administrator making inputs to the administrator terminal 14.

In step S411, the model management unit 106 obtains and registers information about the model on the basis of input information input to the administrator terminal 14. The model management unit 106 can store the obtained information about the model in the storage unit 12 on the basis of an instruction from the administrator terminal 14. Here, the model management unit 106 stores the information having assigned a model ID, which is a unique numbers for the model, to the model.

In step S412, the model management unit 106 obtains and registers information about the model attributes on the basis of input information input to the administrator terminal 14, after which the processing illustrated in Fig. 4B ends. The processing for obtaining the information about the model attributes may be performed at the same time as obtaining the information about the model in step S411. The model management unit 106 can store the obtained information about the model attributes in the storage unit 12 on the basis of an instruction from the administrator terminal 14. Here, the model attributes indicated by the model attributes 202 in Fig. 2 are managed in association with the model ID. The attribute values in the model attributes are assumed to be updated each time the processing illustrated in Fig. 4B is executed.

### Flow of Control Condition Registration

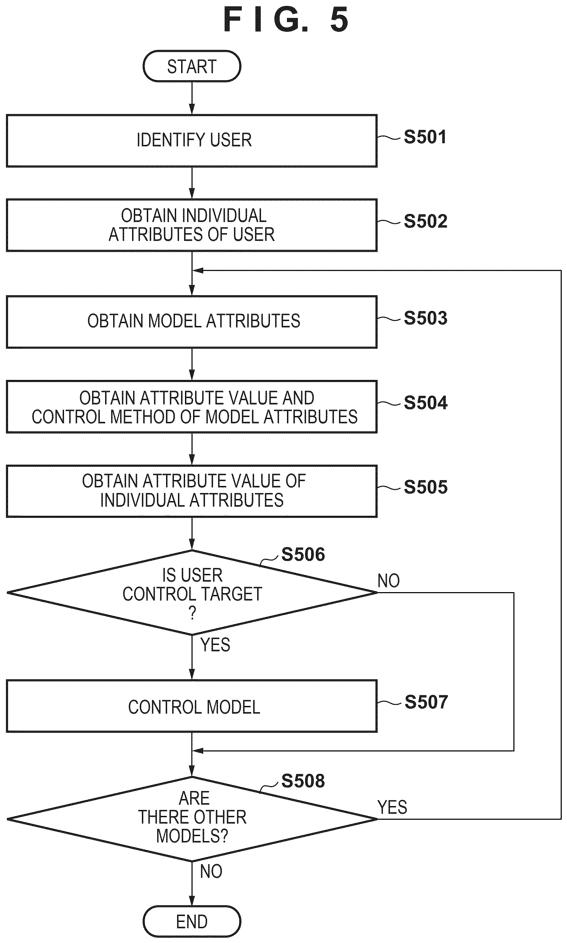

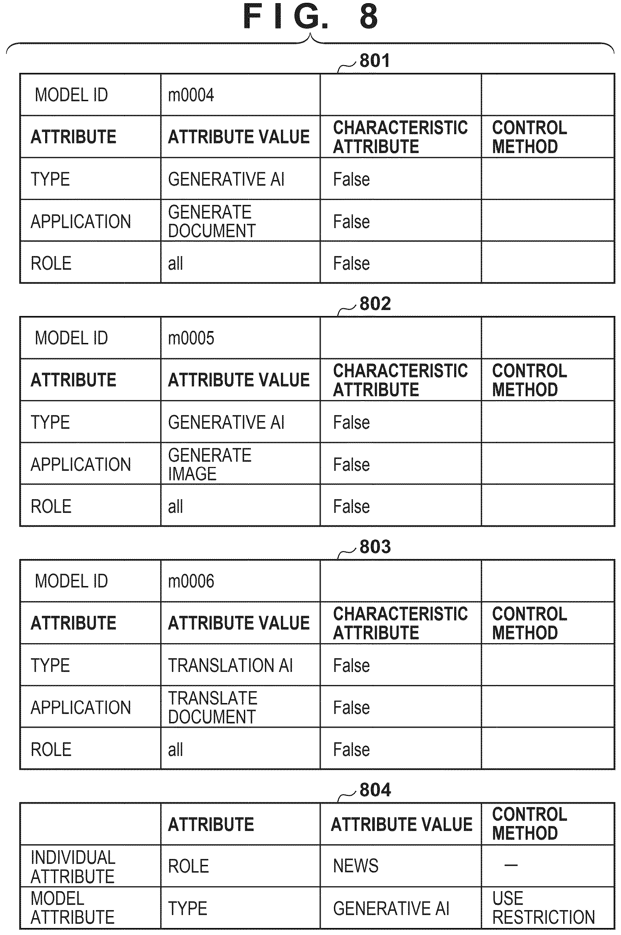

Fig. 4C is a flowchart illustrating an example of processing by which the information processing apparatus 10 registers the control conditions. The control condition registration processing illustrated in Fig. 4C is performed on the basis of inputs made by the administrator to the administrator terminal 14, for example. It is assumed that control conditions referencing the characteristic attribute in the model attributes is used as the default settings for the control conditions, as will be described later in the flow of the model use processing illustrated in Fig. 5. Alternatively, a control pattern such as that indicated by 804 in Fig. 8 can also be set as the control conditions, as described later in the third variation.

In step S421, the model control unit 104 obtains and registers the control conditions input to the administrator terminal 14, after which the processing illustrated in Fig. 4C ends.

### Flow of Model Use

Fig. 5 is a flowchart illustrating an example of processing for controlling the operation of a model in accordance with the user attributes, performed by the information processing apparatus 10 when the user uses a model managed by the information processing apparatus 10. The following descriptions assume that the user is the user indicated by the user ID of u0001, and that the user attributes are the user attributes 201 illustrated in Fig. 2. It is also assumed here that the information processing apparatus 10 manages two models, namely model IDs m0001 and m0002, and that the model attributes of those models are the model attributes 202 and 203, respectively, illustrated in Fig. 2.

Here, with reference to the flowchart in Fig. 5, an example will be described in which the user u0001 attempts to use the model m0001, but cannot do so due to restrictions that prevent the user from using the model. Although the following descriptions assume that the information processing apparatus 10 manages two models, namely model IDs m0001 and m0002, the number of models managed by the information processing apparatus 10 is not limited thereto. The processing illustrated in Fig. 5 is started from step S501 when a start operation (here, a login operation) is performed in the user terminal 13, for example.

In step S501, the individual identification unit 101 identifies the user to be logged in in response to a login operation made by the user (in the user terminal 13). Here, the user u0001 uses the user terminal 13 to log in to the information processing apparatus 10, and the individual identification unit 101 therefore identifies that user as the user u0001.

In step S502, the individual attribute obtainment unit 102 obtains the user attributes associated with the identified user by referring to the storage unit 12. Here, the user attributes associated with the user u0001 are obtained.

In step S503, taking one of the models stored in the storage unit 12 as a processing target, the model attribute obtainment unit 103 obtains the model attributes of that model. Here, the model attribute obtainment unit 103 first obtains the model attributes 202 of the model m0001.

In step S504, the model control unit 104 obtains the attribute value of the attribute item that is the characteristic attribute, as well as the control method, in the model attributes. Note that control conditions referencing the characteristic attribute in the model attributes are used here. Additionally, the attribute item that is the characteristic attribute of the model attributes 202 is "role", the attribute value thereof is "usable for purposes other than news", and the control method is "news use restricted".

In step S505, in the user attributes, the model control unit 104 obtains the attribute value of the same attribute item as the attribute item that is the characteristic attribute in the model attributes. Here, the attribute item that is the characteristic attribute in the model attributes 202 is "role", and thus "news reporter" is obtained as the attribute value for "role" in the user attributes 201.

In step S506, the model control unit 104 determines whether to restrict the user from using the model m0001 on the basis of the model attributes and the user attributes. If the use of the model is to be restricted, the sequence moves to step S507; if not, the sequence moves to step S508. Here, the model control unit 104 determines whether the user is subject to control (whether to restrict the use of the model by the user) by comparing the attribute values of the attribute items that are the characteristic attributes between the model attributes and the user attributes. Here, the attribute value in the model attributes 202 is "usable for purposes other than news", and the attribute value in the user attributes 201 is "news reporter", meaning that the user u0001 is subject to control.

In step S507, the model control unit 104 restricts the use of the model by the user subject to the processing, after which the sequence moves to step S508. Here, the user u0001 is subject to control, and thus the use of the model is restricted. The processing for restricting the use of the model executed here is not particularly limited as long as processing for preventing the user from using the model is performed. For example, a model for which use is restricted may be hidden from the user, a display indicating that the model cannot be used may be made (e.g., the display of the icon of the model may be changed), or a warning may be made when a model that cannot be used is selected.

In step S508, the model control unit 104 confirms whether a model not yet subject to the processing in step S503 is present. If a model not yet subject to the processing is present, the sequence returns to step S503; if not, the processing of Fig. 5 ends. Here, if the model m0001 is subject to the processing first, the model 0002 is still present, and thus the processing of Fig. 5 ends after the processing of steps S503 to S508 is executed again with the model m0002 as the subject of the processing. Additionally, the attribute item that is the characteristic attribute of the model attributes 203 for the model m0002 is "role", and the attribute value thereof is "all" (that is, usable by users in all roles). As such, the use of the model m0002 is not restricted. Accordingly, for the user u0001, the use of the model m0001 is restricted, but the use of the model m0002 is not.

Such a configuration makes it possible to obtain the attributes of the identified user and the attributes of the machine learning model, and to control the operation of the machine learning model on the basis of those attributes. Accordingly, avoiding the use of models that are inappropriate for the user and controlling the use of appropriate models in accordance with the user attributes and the model attributes makes it possible to prevent situations such as documents or images containing false information or infringing on copyright being generated. The user can also be prompted to use an Al model appropriate for their preferences or purpose of use.

Although the present embodiment describes a case where the use of a model is restricted when the user is a news officer, this is, as described above, merely an example, and the conditions for restricting models are not particularly limited thereto. For example, whether the position of the user is a managerial position or a general position may be determined according to the user attributes, and the use of the model may be restricted when the position of the user is a general position.

### First Variation on First Embodiment

An example of restricting the use of the model m0001 for the user u0001 has been described in the present embodiment with reference to Fig. 5, for example. However, rather than completely prohibiting the use of a model for which use is to be restricted according to the control conditions, it is also conceivable to restrict only some functions of the model. For example, it is possible for the information processing apparatus 10 to avoid restricting the use of functions, among processing using Al models, which are considered unlikely to greatly modify an image, such as image upscaling processing or noise reduction processing.

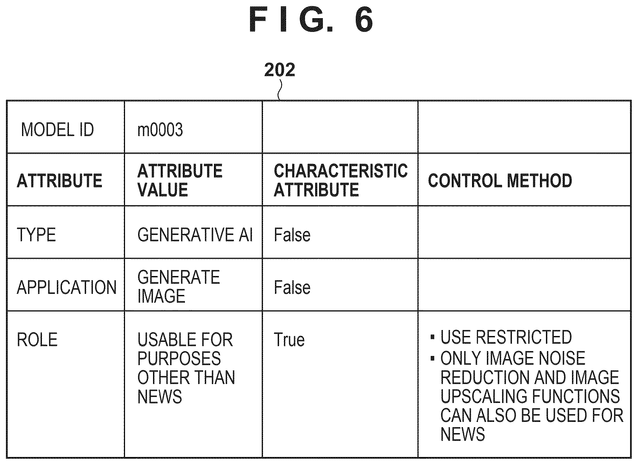

From this perspective, the information processing apparatus 10 according to the present variation restricts some of the functions of a model when the use of that model is to be restricted for a user. An example in which the user u0001 having the user attributes 201 illustrated in Fig. 2 attempts to use a model m0003 having model attributes 601 illustrated in Fig. 6 will be described next.

Fig. 6 illustrates the model attributes 601 corresponding to the model ID "m0003". The model m0003 is an image generation AI model. The model attributes 601 include type, application, and role as the attribute items. In addition, the attribute item that is the characteristic attribute of model m0003 is "role", and the attribute value of the role is "usable for purposes other than news". The control method for "role" in the model attributes 601 is indicated as "use restricted", which means "news use restricted", as in the model attribute 202; furthermore, "only image noise reduction and image upscaling functions can also be used for news" is additionally indicated. According to such content, when the user u0001 attempts to use the model m0003, the use of the model m0003 is restricted, because the user u0001 is a news reporter. However, image noise reduction processing or image upscaling processing can still be executed.

According to such processing, some of the functions of the model can be restricted as the restriction on the use of the model by the user. Through this, functions unlikely to greatly modify images can be made usable, while the use of image generation functions likely to greatly modify images is prohibited, making it possible to prevent inappropriate images from being generated.

### Second Variation on First Embodiment

The present embodiment assumes that one set of user attributes 201 is associated with the user u0001. However, it is also conceivable to associate a plurality of sets of user attributes with a single user in a switchable manner such that the attributes can be separated for use for, for example, a main job and a side job, or work time and non-work time.

From this perspective, the information processing apparatus 10 according to the present variation associates a plurality of sets of user attributes with a single user and sets which of the plurality of user attributes are to be applied to be switchable.

In Fig. 7, two sets of user attributes associated with a user u0002 are illustrated as user attributes 701 and user attributes 702. Here, the user attributes 701 are assumed to be user attributes corresponding to a main job of the user u0002, and the user attributes 702 are assumed to be user attributes corresponding to a side job of the user u0002.

As described earlier, the user attributes can be registered on the basis of operations performed in the user terminal 13. In a case such as this, where a plurality of sets of user attributes are associated with a single user, it is assumed that one set of the user attributes is enabled in advance. This enabling can be performed on the basis of a selection made by the user, for example. For example, a plurality of sets of user attributes may be enabled instead of one, and the use of the model may be restricted "when the user is indicated as a news officer in any of the user attributes."

The model m0001 indicated in Fig. 2 is a model for which use is restricted when the user is a news officer. When the user u0002 attempts to use the model m0001, and the user attributes 701 are set as the enabled user attributes, the use is restricted because the role of the user is "news reporter". When the user attributes 702 are set as the enabled user attributes, the use is not restricted because the role of the user is "illustrator".

According to such processing, setting a plurality of sets of user attributes for a single user to be switchable makes it possible to perform processing for restricting the use of a model when using the model is inappropriate, but not restrict the use of the model in other situations. This makes it possible to take full advantage of the useful functions of the model without restricting functions needlessly.

### Third Variation on First Embodiment

The information processing apparatus 10 according to the present embodiment is described as setting an attribute item to serve as the characteristic attribute, and control conditions, for each model, and controlling the operation of the model on the basis thereof, on a model-by-model basis. However, it is also conceivable to uniformly restrict the use of models having specific model attributes on the basis of user attributes, regardless of the control conditions set for each model.

The following will describe an example in which the information processing apparatus 10 uniformly restricts the use of a model of the "generative Al" type when the user is a news officer. In Fig. 8, three models are illustrated, namely model IDs "m0004", "m0005", and "m0006", and these models have model attributes 801 to 803, respectively. As indicated in the attribute item "type", the model m0004 and the model m0005 are generative AI, and the model m0006 is a translation AI.

Here, the model control unit 104 can set the control conditions to, for example, "when the user is a news officer and the type of the model attributes is generative Al, use of the model is restricted for the user". It is assumed that such control conditions can be set, for example, as control conditions 804 illustrated in Fig. 8, and that the storage unit 12 stores the control conditions on the basis of inputs made in the administrator terminal 14 in advance. The user u0001 is a news officer, and thus when the user u0001 attempts to use each model, the use of the models m0004 and m0005, which are generative AI, is restricted, whereas the use of the model m0006 is not restricted.

The processing according to the present variation can be performed basically in the same manner as that illustrated in Fig. 5, with the exception of step S506. In step S506 according to the present variation, the model control unit 104 determines whether to restrict use of the model by the user on the basis of the user attributes, the model attributes, and the control conditions.

According to such processing, the use of all machine learning models having specific model attributes can be restricted uniformly on the basis of the user attributes. Although an example of restricting the use of a generative Al model has been described here, the configuration is not particularly limited thereto, as long as the use of a model having specific model attributes is similarly restricted. For example, the use of a model having specific attributes may be restricted for younger users (e.g., users under a predetermined age (e.g., under 18 years old)).

### Second Embodiment

The first embodiment described an example of restricting the use of a machine learning model as control of the operation of the machine learning model. However, it is also conceivable to perform appropriate operations according to user attributes, such as creating documents using technical terminology for users in technical positions and creating documents without technical terminology for users in non-technical positions. From this perspective, the information processing apparatus 10 according to the second embodiment performs control processing for changing the operation or function of a machine learning model as the control of the operation of the machine learning model. According to such processing, model operations more appropriate for the user can be executed, making it possible to use the model in a manner which is easy to use for the user. The information processing apparatus 10 according to the present embodiment basically has the same configuration as that according to the first embodiment, and can perform the same processing. Redundant descriptions will therefore be omitted hereinafter.

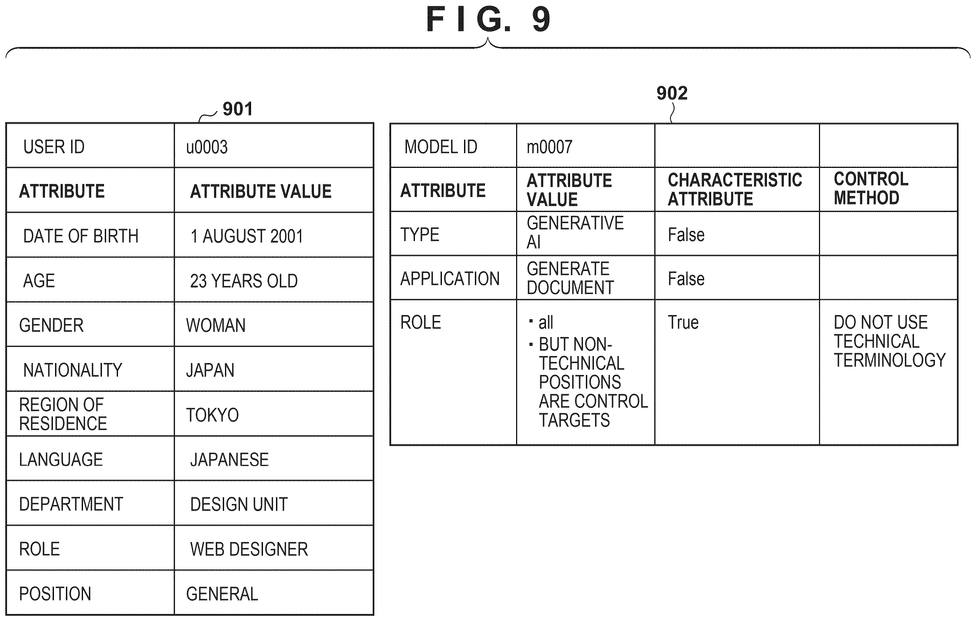

The model control unit 104 according to the present embodiment changes the operation or a function of the model on the basis of the user attributes and the model attributes. Fig. 9 illustrates an example of a user u0003 using the information processing apparatus 10, and a model m0007 managed by the information processing apparatus 10, according to the present embodiment. In this example, the model m0007 has model attributes 902. In the model attributes 902, the attribute item that is the characteristic attribute is "role", the attribute value for "role" is "all, but non-technical positions are control target", and the control method is "do not use technical terminology". In other words, when the model m0007 is used by the user, the information processing apparatus 10 executes control for changing the operation or function of the model if the user's role is not a technical position, and the content of the change in the control is "do not use technical terminology".

The user u0003 has a role of "web designer", which is set here as a non-technical position. Types of roles corresponding to technical positions can be set in advance. The model control unit 104 refers to user attributes 901 of the user u0003, and because the user's role is web designer, performs control corresponding to "do not use technical terminology" when the model m0007 is used. The model control unit 104 can control the model m0007 by inputting the prompt "do not use technical terminology" into the model.

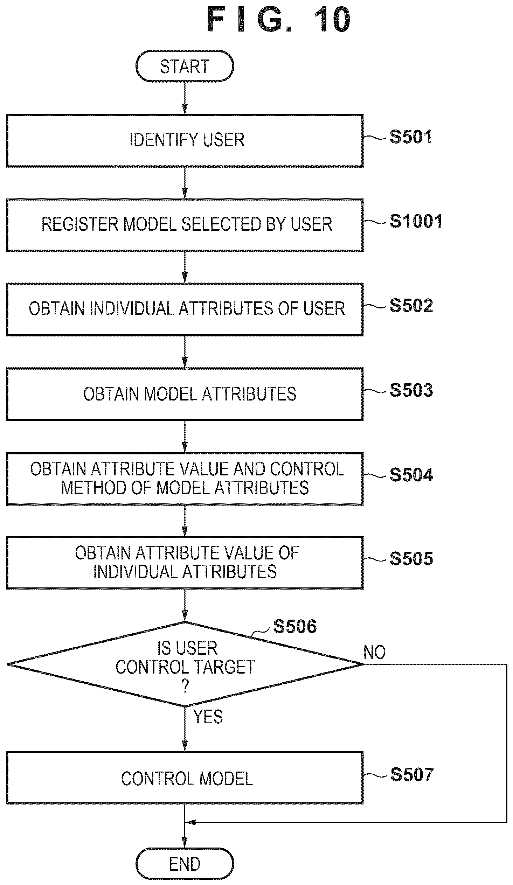

Fig. 10 is a flowchart illustrating an example of processing for controlling the model in accordance with the user attributes, performed by the information processing apparatus 10 according to the present embodiment. Aside from step S1001 being performed between steps S501 and S502, and step S508 being skipped, the processing illustrated in Fig. 10 is the same as the processing illustrated in Fig. 5 and described in the first embodiment. Redundant descriptions thereof will therefore be omitted.

The first embodiment described the model subject to the processing in step S503 as being set to a single model, but here, the processing is executed using a model selected by the user as the subject of the processing. In step S1001, the information processing apparatus 10 registers the model subject to the processing. Here, the information processing apparatus 10 can record a model selected by the user as the subject of the processing on the basis of user input in the user terminal 13.

In step S506, the model control unit 104 determines whether to restrict the user from using the model on the basis of the model attributes and the user attributes. If the use of the model is to be restricted, the sequence moves to step S507; if not, the processing of Fig. 10 ends. In step S507, the model control unit 104 changes the operation or the function of the model on the basis of the control method indicated in the model attributes. Here, the model control unit 104 controls the model by further inputting "do not use technical terminology" as a prompt for the model m0007 on the basis of the model attributes 902.

According to this processing, control processing for changing the operation or function of the machine learning model can be performed as the control of the operation of the machine learning model. Accordingly, model operations more appropriate for the user can be executed, making it possible to use the model in a manner which is easy to use for the user.

Although an example of controlling whether to use technical terminology on the basis of whether the role of the user is a technical position has been described here, the processing for changing the operation or function is not particularly limited thereto. For example, if an elderly person (e.g., a user over a predetermined age (e.g., over 70 years old)) uses the generative Al model, processing may be performed to avoid using expressions considered difficult to understand, or change parts of expressions to be more polite.

### Third Embodiment

An information processing apparatus 10 according to the third embodiment sets a priority level for each model on the basis of user attributes and model attributes. The priority level for each model is a priority level of a model with respect to other models for which the information processing apparatus 10 is capable of executing processing, and is used in the execution of the model, the display processing of the model, and the like. According to such processing, increasing the priority level of a model that is more appropriate for the user makes it possible to prompt the user to select a model easier for the user to use. For example, if the user is a Japanese speaker, the priority level can be set higher for interpreting models better for Japanese. The information processing apparatus 10 according to the present embodiment basically has the same configuration as that according to the first embodiment, and can perform the same processing. Redundant descriptions will therefore be omitted hereinafter.

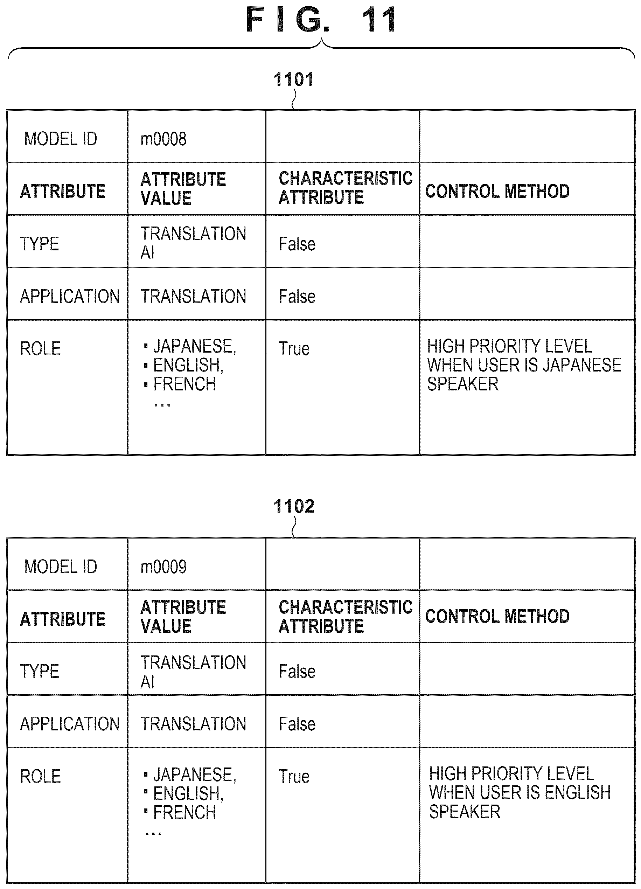

Fig. 11 illustrates an example of a model m0008 and a model m0009 managed by the information processing apparatus 10 according to the present embodiment. The model m0008 has model attributes 1101, and the model m0009 has model attributes 1102. Both of these models are interpretation AI models (models that convert input sentences into multilingual sentences and output the results). In both models, the attribute item that is the characteristic attribute is "language", and in the language attribute value, translatable language types are arranged in the order of a quality level set in advance. In the language control method, the model m0008 is set to "high priority level when the user is a Japanese speaker", and the model m0009 is set to "high priority level when the user is an English speaker".

Here, the language of the user u0001 is "Japanese", as indicated in the user attributes 201. If such a user u0001 attempts to use the model m0008 and the model m0009, the information processing apparatus 10 performs the control processing with the model m0008 having a higher priority level.

The information processing apparatus can control the display of usable models in accordance with the priority levels. For example, the information processing apparatus 10 may make a pop-up display for models having at least a predetermined priority level, in order (e.g., the highest model), or may display the models in an order corresponding to the priority levels. For example, the information processing apparatus 10 may display the order of the priority levels the models along with those models (e.g., a priority level order may be displayed as a number using a badge for each of the models). Additionally, for example, the information processing apparatus 10 may display a predetermined number of models in accordance with the priority level, such as displaying only the model having the highest priority level.

Aside from step S507, the processing performed by the information processing apparatus 10 according to the present embodiment can be performed in the same manner as the processing illustrated in Fig. 5 and described in the first embodiment, and redundant descriptions thereof will therefore be omitted.

In step S507 according to the present embodiment, the model control unit 104 sets the priority level of the model on the basis of the control method indicated in the model attributes. Here, the model control unit 104 sets the priority level of the model m0008 higher, but does not set the priority level of the model m0009 higher.

Note that the priority level may be set, for example, by setting the priority level for each model in three stages, namely high, medium, and low, and a display based on those settings may be made. For example, priority values may be set in 100 stages, from 1 to 100, for each model, and the priority levels may be set by ranking the models in accordance with the priority values. These processes for setting the priority level are merely examples, and predetermined processing can be executed as long as priority levels for the users are set among the models.

According to such processing, the priority level for each model can be set on the basis of the user attributes and the model attributes. Accordingly, increasing the priority level of a model that is more appropriate for the user makes it possible to prompt the user to select a model that is easier for the user to use. Although an example in which a pre-registered language is referenced as an attribute of the user has been described here, the priority level for each model may be set additionally using environment information about the user, such as GPS location information, obtained from the user terminal 13. For example, if the language in the user attributes is "Japanese" but the user is determined to be in an English-speaking region on the basis of GPS location information, the information processing apparatus 10 may set the priority level such that the priority level of an interpretation Al model good for Japanese and English interpretation is high. According to such processing, the user can be prompted to select a model appropriate not only for the registered user attributes, but also for the environment of the user.

Note that if the model is a model for detecting objects from captured images, the priority level of an object detection model considered to have high detection accuracy in dark places may be raised at a time determined to be nighttime, using the time as the environment information of the user.

### Fourth Embodiment

The first embodiment described an example of controlling the operation of a model using attributes registered in advance as user attributes. However, even if the model is restricted from being used by a news officer, it is conceivable that the purpose of use of the model is creating documents not to be released outside the company (e.g., documents for internal use), in which case there is no need to restrict the use. From this perspective, the information processing apparatus 10 according to a fourth embodiment controls the operation of the model using the purpose for which the user is to use the model as one of the user attributes.

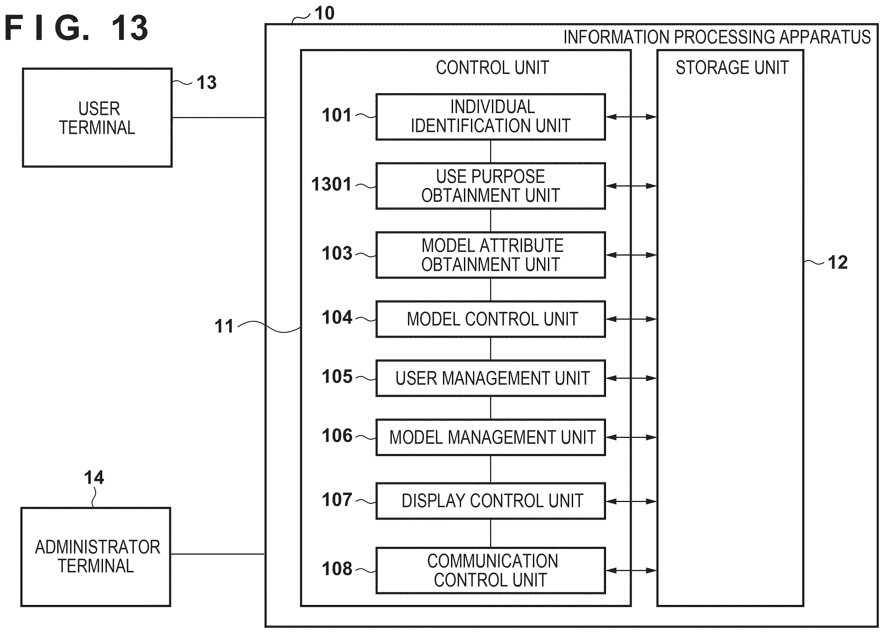

Fig. 13 is a block diagram illustrating an example of the functional configuration of the information processing apparatus 10 according to the present embodiment. Aside from including a use purpose obtainment unit 1301 instead of the individual attribute obtainment unit 102, the information processing apparatus 10 according to the present embodiment has the same configuration as in Fig. 1 and can perform the same processing. Redundant descriptions will therefore be omitted.

The use purpose obtainment unit 1301 obtains the purpose for which the user is to use the model. For example, the use purpose obtainment unit 1301 may obtain the purpose for which the user is to use the model on the basis of an input from the user in a use purpose registration screen displayed on the user terminal 13 (e.g., a selection made from among options). For example, "creation for external use" and "creation for internal use" may be prepared as options for the purpose of use, and the selection of one of these by the user may be obtained as the purpose of use.

Given that external content is intended for a large number of subscribers, the accuracy of the content and the observance of copyright are important. Therefore, it is also conceivable to restrict the use of generative Al models when creating content for external use. From this perspective, the usable models are restricted if the purpose of use is "creation for external use". However, if the purpose of use is "creation for internal use", restrictions on the use of the model are relaxed.

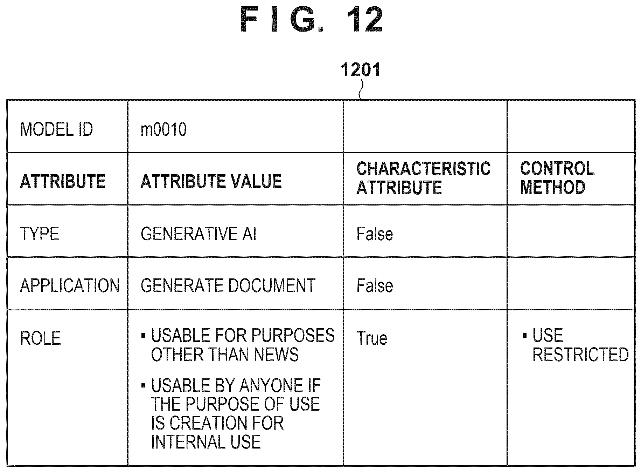

Fig. 12 illustrates an example of a model m0010 having model attributes 1201, managed by the information processing apparatus 10 according to the present embodiment. The attribute item which is the characteristic attribute in the model m0010 is "role"; meanwhile, in addition to "usable for purposes other than news", the attribute value for "role" includes "usable by anyone if the purpose of use is creation for internal use". In this manner, for a given model, if the purpose for which the user is to use the model is a predetermined purpose, the model control unit 104 can perform control not to restrict (or to restrict) the use of that model.

Although the user attributes described in the example according to the first embodiment are assumed not to be used here, such user attributes may also be used. For example, as also indicated in the attribute values for "role" in the model attributes 1201, the model control unit 104 may restrict the use of the model only when the user is affiliated with a news organization and the purpose of use is not creation for internal use.

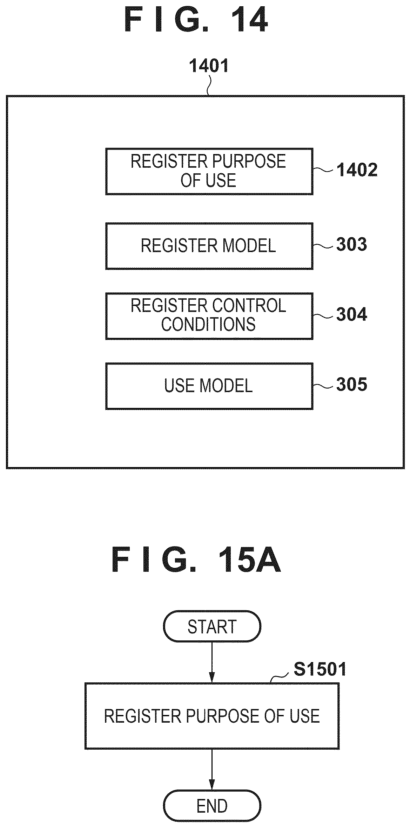

Fig. 14 is a diagram illustrating examples of user interfaces (Uls) in which display control is performed by the display control unit 107 according to the present embodiment. A UI 1401 illustrated in Fig. 14 is the same as the UI 301 illustrated in Fig. 3, except that a button 1402 for registering the purpose of use is displayed instead of the button 312 for registering the user attributes. When the button 1402 is pressed, the UI transitions to the use purpose registration screen (not shown), and presents the user with options for the purpose of use. Here, a usage mode of the model can be selected after the registration of the purpose of use and the registration of at least one model are complete. If an operation for registering control conditions has not been performed, the default settings are assumed to be applied.

Fig. 15A is a flowchart illustrating an example of processing by which the information processing apparatus 10 registers the purpose of use. The processing for registering the purpose of use illustrated in Fig. 15A is performed on the basis of inputs to the user terminal 13, for example. It is assumed here that the purpose of use is registered by the user u0001 making an input to the user terminal 13. In step S1501 illustrated in Fig. 15A, the use purpose obtainment unit 1301 obtains the purpose of use on the basis of such an input operation performed in the user terminal 13, and stores the purpose of use in the storage unit 12, after which the processing illustrated in Fig. 15A ends.

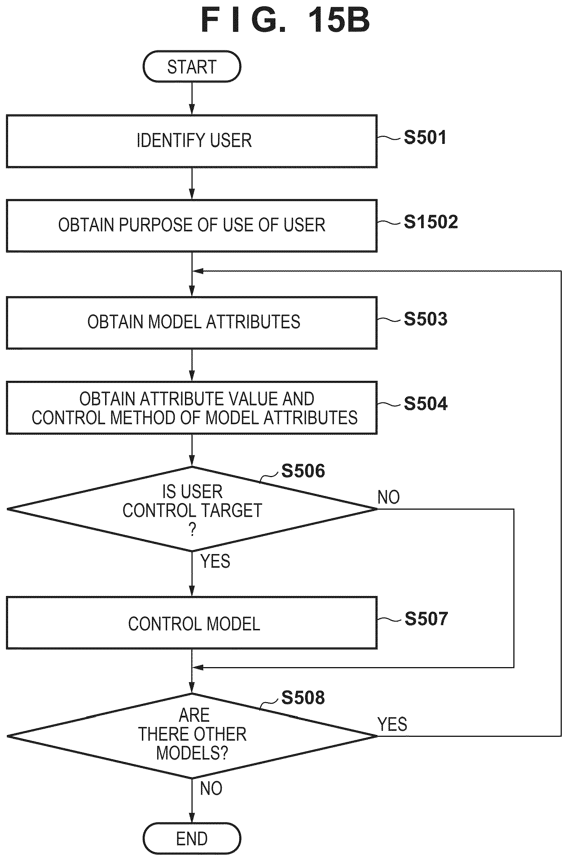

Fig. 15B is a flowchart illustrating an example of the processing for controlling the operation of the model on the basis of the purpose of use and the model attributes, performed by the information processing apparatus 10 according to the present embodiment. Aside from performing step S1502 instead of step S502 and skipping step S505, the processing illustrated in Fig. 15B is the same as the processing illustrated in Fig. 5 and described in the first embodiment. Redundant descriptions will therefore be omitted.

In step S1502, the use purpose obtainment unit 1301 obtains the purpose of use of a registered user from the storage unit 12, after which the sequence moves to step S503.

In step S506, the model control unit 104 determines whether to restrict the use of the model by the user on the basis of the purpose of use and the model attributes. Steps S507 and S508, which are based on the result of this determination, are the same as in the first embodiment, and will therefore not be described here.

According to such processing, the operation of a machine learning model can be controlled in accordance with the purpose for which the user is to use the model, and the model attributes. Accordingly, avoiding the use of models that are inappropriate for the user and controlling the use of appropriate models in accordance with the purpose of use and the model attributes makes it possible to prevent problems such as documents or images containing false information or infringing on copyright being generated. Furthermore, allowing the use of the model according to the purpose of use makes it possible to take full advantage of the useful functions of the model.

The user can be prompted to use an Al model appropriate for their preferences or purpose of use.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (10) capable of executing processing performed using a machine learning model, the information processing apparatus comprising:
an identifying means (101) configured to identify a user;
a first obtaining means (102) configured to obtain an attribute of the identified user;
a second obtaining means (103) configured to obtain an attribute of the machine learning model; and
a model control means (104) configured to perform control of operation of the machine learning model based on the attribute of the user and the attribute of the machine learning model.

2. The information processing apparatus according to claim 1,
wherein the model control means (104) is configured to perform control of operation of the machine learning model by restricting use of the machine learning model by the user.

3. The information processing apparatus according to claim 2,
wherein the restriction of use of the machine learning model by the user corresponds to restricting a function of the machine learning model.

4. The information processing apparatus according to any one of claims 1 to 3,
wherein the model control means (104) is configured to perform control of operation of the machine learning model by prohibiting use of the machine learning model by the user.

5. The information processing apparatus according to any one of claims 1 to 4,
wherein the model control means (104) is configured to perform control of operation of the machine learning model by changing operation of the machine learning model by the user or a function of the machine learning model.

6. The information processing apparatus according to any one of claims 1 to 5, further comprising:
a user management means (105) configured to set an attribute of the user to be enabled from among a plurality of attributes of the user obtained by the first obtaining means (102).

7. The information processing apparatus according to any one of claims 1 to 6,
wherein the model control means (104) is configured to perform the control of operation of the machine learning model individually for each of a plurality of machine learning models.

8. The information processing apparatus according to any one of claims 1 to 7,
the model control means (104) is configured to perform the control of operation of all machine learning models having a specific attribute based on the attribute of the user.

9. The information processing apparatus according to any one of claims 1 to 8, wherein the model control means (104) is configured to set a priority level of the machine learning model relative to another machine learning model executable by the information processing apparatus, based on the attribute of the user and the attribute of the machine learning model.

10. The information processing apparatus according to claim 9, further comprising:
an environment information obtaining means configured to obtain environment information of the user,
wherein the model control means (104) is configured to set the priority level further based on the environment information in addition to the attribute of the user and the attribute of the machine learning model.

11. The information processing apparatus according to claim 9, further comprising:
a display control means (107) configured to control, based on the priority level, display of a machine learning model for which processing is executable by the information processing apparatus.

12. The information processing apparatus according to any one of claims 1 to 11,
wherein the attribute of the user is a purpose of use of the machine learning model by the user.

13. An information processing method for controlling an information processing apparatus capable of executing processing performed using a machine learning model, the information processing method comprising:
identifying a user;
obtaining an attribute of the identified user;
obtaining an attribute of the machine learning model; and
performing control of operation of the machine learning model based on the attribute of the user and the attribute of the machine learning model.

14. A program that, when executed by a computer, causes the computer to perform the information processing method according to claim 13.
